Europäisches Patentamt

European Patent Office

Office européen des brevets

(11) Numéro de publication: **0 049 201**
A1

## DEMANDE DE BREVET EUROPEEN

(21) Numéro de dépôt: 81401490.8

(22) Date de dépôt: 25.09.81

(51) Int. Cl.³: **A 61 G 5/00**, B 60 P 7/08

(30) Priorité: 30.09.80 FR 8020895

(43) Date de publication de la demande: 07.04.82
Bulletin 82/14

(84) Etats contractants désignés: AT BE CH DE GB IT LI LU
NL SE

(71) Demandeur: **TRANSPORTS RECHERCHES ETUDES
GROUPEMENT D'INTERET ECONOMIQUE
(T.R.E.G.I.E.), 67, rue des Bons-Raisins, F-92500 Ruell
Malmaison (FR)**

(72) Inventeur: **Emmanuel, Remy, 12, avenue
Jules-Massenet, F-78530 BUC (FR)**

(74) Mandataire: **Ernst-Schonberg, Michel et al, R.N.U.R.
S. 0804 B.P. 103 8 & 10, avenue Emile-Zola,
F-92109 Boulogne Billancourt (FR)**

(54) Dispositif d'immobilisation d'un cadre de fauteuil roulant pour handicapés physiques, notamment sur un plancher de véhicule.

(57) a) Secteur technique: Immobilisation des fauteuils roulants dans les véhicules au moyen d'une traverse fixée au cadre du fauteuil et d'un pied de verrouillage.

b) Caractéristique technique principale: L'extrémité du pied (1) porte un verrou pivotant (2) disposé sous le pied et qui est manœuvré par une poignée (3). Pour permettre l'immobilisation en hauteur du pied en position de verrouillage, la tige de commande du verrou est associée à un élément cranté manœuvré en rotation par la poignée qui bloque le pied dans le boîtier support (6) de celui-ci au niveau de crans complémentaires portés par les parois internes de ce boîtier.

c) Application: Immobilisation des fauteuils roulants sur les planchers et plates-formes des véhicules.

Fig.1

Dispositif d'immobilisation d'un cadre de fauteuil roulant pour handicapés physiques, notamment sur un plancher de véhicule.

L'invention concerne un dispositif d'immobilisation d'un cadre de fauteuil roulant pour handicapés physiques, par exemple sur un plancher de véhicule, au moyen d'une traverse dont les extrémités portent des moyens de fixation ajustables au cadre du fauteuil, et d'un pied d'immobilisation situé dans la partie médiane de la traverse et fixé à cette dernière tandis qu'une poignée manoeuvre la montée, la descente et le verrouillage du pied contre les parois d'un orifice du plancher.

De tels dispositifs rendent une certaine autonomie à l'handicapé et lui permettent d'évoluer avec le fauteuil et de l'immobiliser sur le plancher d'un véhicule ou sur une plate-forme.

Selon un mode de réalisation proposé par la demande de brevet 80.08258 déposée le 14 avril 1980 au nom de la demanderesse, une poignée de manoeuvre tournante actionne un verrou et assure la montée et la descente du pied au travers d'un boîtier fixé à la traverse.

L'invention vise à perfectionner un tel dispositif du point de vue verrouillage du pied dans sa position de repos et dans sa position de travail, afin d'assurer un réglage automatique de la course du pied, et de supprimer les mouvements verticaux parasites du pied par rapport à la traverse.

Selon l'invention, la poignée de manoeuvre se prolonge par une tige engagée dans le boîtier, munie à son extrémité du verrou, et dont la partie sous boîtier porte un élément manoeuvré en rotation par la poignée, pour assurer l'immobilisation du pied par rapport au boîtier au travers de la paroi du pied.

Le dispositif ainsi réalisé utilise le mouvement de rotation de la tige de commande du verrou d'immobilisation pour réaliser :

- la fonction de blocage du pied contre son boîtier en position d'immobilisation du dispositif. Ce blocage est assuré par des crantages

- 2 -                                          0049201

portés par la tige et le boîtier, qui empêchent les mouvements du boîtier par rapport au pied sous l'action des réactions de roulement,

- la fonction de blocage du pied en position de repos. Ce blocage est assuré par l'élément cranté de la tige, utilisé en butée sur le bord supérieur du boîtier, qui empêche le pied de retomber au cours des évolutions du fauteuil roulant.

D'autres caractéristiques et avantages du dispositif apparaîtront à la lecture de la description faite en référence du dessin annexé, dans lequel :

- la figure 1 est une vue en élévation du dispositif ;

- la figure 2 est une vue de dessus du dispositif ;

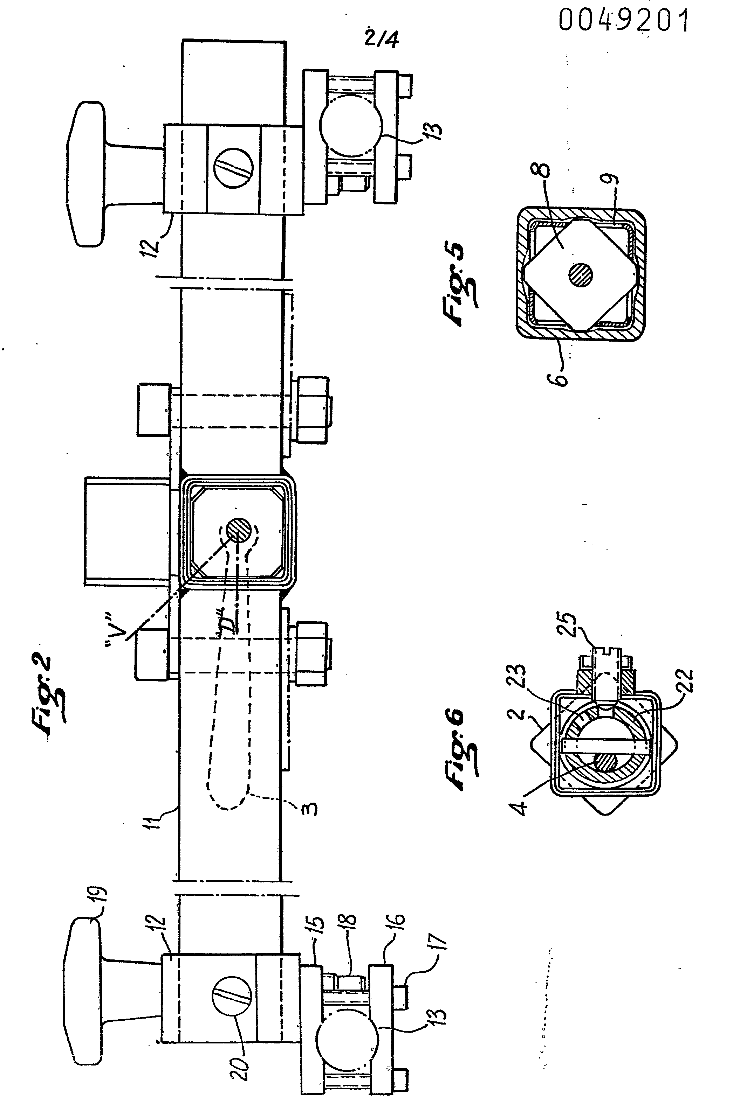

- la figure 3 est une coupe longitudinale du pied et de son boîtier de retenue selon la ligne III-III de la figure 1 ;

- la figure 4 est une coupe à une plus grande échelle de l'extrémité du pied ;

- la figure 5 est une coupe horizontale du pied selon la ligne V-V de la figure 1 ;

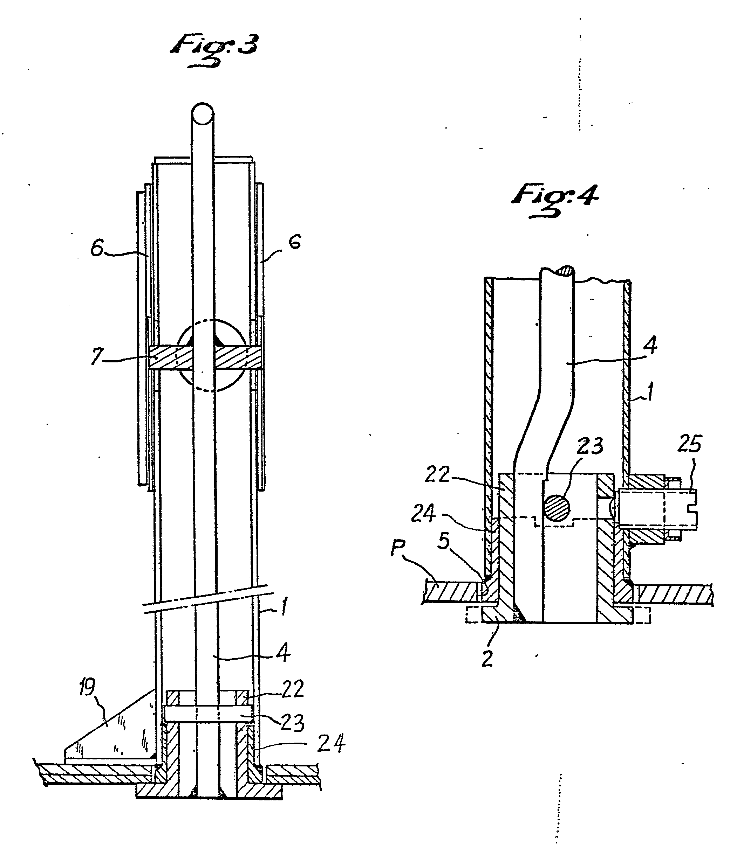

- la figure 6 est une coupe horizontale du pied selon la ligne VI-VI de la figure 1 ;

- la figure 7 représente un mode de réalisation possible de réglage vertical du pied ;

- la figure 8 est une vue en coupe longitudinale d'un exemple de réalisation de l'orifice du plancher ;

- la figure 9 est une vue de dessus dudit orifice.

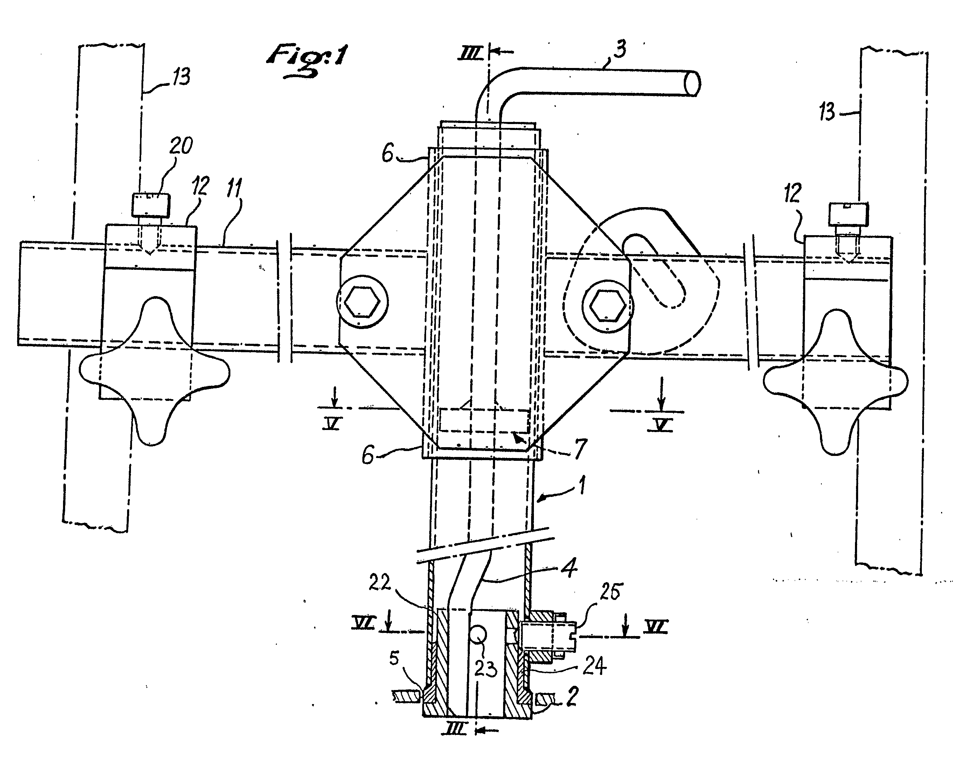

Selon la figure 1, le pied 1 est constitué par un tube de section carrée terminé à sa base par un verrou 2 de même section. Cette section facilite l'immobilisation du pied dans l'orifice 5 du plancher et évite au pied les mouvements de rotation parasites sous l'action des réactions de la route.

Le verrou se prolonge vers le haut par un corps cylindrique 22 qui porte une goupille transversale 23 positionnant en hauteur le verrou 2 par rapport à la pièce de guidage 24 solidaire du pied 1. La poignée de manoeuvre 3 actionne le verrou 2 par l'intermédiaire d'une tige de commande 4.

La tige 4 porte un élément d'immobilisation 7. Selon le mode de réalisation représenté, l'élément d'immobilisation est constitué par une pastille carrée 8 à sommets arrondis porteurs de crans engageables dans des crans complémentaires portés par les parois du boîtier support 6 du pied. Cette solution fait appel à un taraudage sur les quatre faces intérieures du boîtier 6 à section carrée, solidaire de la traverse. La pastille 8, solidaire de la tige 4, porte donc un filetage sur chacun de ses sommets pour venir se visser dans les filets correspondants du boîtier. Pour faciliter l'engagement des divers filets, il est prévu un jeu qui se réduit lorsque les filets sont engagés. Ce jeu est obtenu par une came dans la pièce de guidage 24 sous la goupille 23. Le jeu maximum correspond à la position déverrouillée de la tige. Cette disposition permet un réglage en hauteur du pied de 2 en 2 mm.

L'arrêt positif des quatre sommets de la pastille 8 sur le boîtier, s'effectue au travers de quatre fenêtres 9 pratiquées dans les 4 parois du pied, la position désaxée desdites fenêtres, permet à leurs bords de constituer des butées de positionnement angulaire de la pastille 8 et par voie de conséquence de définir les positions de verrouillage V et de déverrouillage D de la poignée. La traverse 11 montrée plus en détail sur les figures 1 et 2 se compose de deux tubes à section cylindrique soudés au boîtier 6 dont les extrémités libres portent un collier de serrage 12. Chaque collier est rendu solidaire d'un élément tubulaire 13 du cadre du fauteuil au moyen de coquilles de serrage 15, 16 maintenues l'une à l'autre au moyen de vis 17. Un goujon 18 vissé dans la coquille de serrage 15 traverse les joues du collier 12 et reçoit un bouton de commande 19 dont la manipulation dans un sens ou dans l'autre, assure le serrage de l'ensemble des coquilles 15, 16 contre le collier 12 et le déplacement possible de ce dernier sur l'élément tubulaire de la traverse 11. Chaque élément de traverse porte à son extrémité une vis pointeau 20 qui détermine le calage axial et angulaire du collier 12 et assure un positionnement angulaire correct de la traverse dans ce collier.

En se reportant plus particulièrement à la figure 4, on voit le verrou pivotant 2 dont la section carrée permet à celui-ci de prendre appui sous l'orifice 5 pratiqué dans le plancher P du véhicule à la suite d'une rotation communiquée par la poignée 3 à la tige 4.

Le corps 22 porte par ailleurs des perçages dont l'aire coopère avec un système connu d'arrêtoir à bille 25 porté par le pied qui permet l'immobilisation du verrou dans les positions précitées de verrouillage et de déverrouillage.

Les figures 8, 9 décrivent un exemple de réalisation de l'orifice du plancher.

Selon les figures 8, 9 les orifices sont constitués à partir de plaques 26, 27 encastrées dans le plancher P. Les plaques 26 ou 27 sont constituées d'une partie supérieure et d'une partie inférieure.

Selon la figure 9 la plaque supérieure 27 est percée d'une ouverture allongée 273 qui converge vers une partie rétrécie 274 dont les dimensions sont légèrement supérieures à celles du verrou.

La plaque inférieure 26 porte deux ouvertures 261, 261' en correspondance avec l'ouverture 273. Un obturateur non représenté peut dissimuler une ou deux/des ouvertures précitées en cas de non utilisation de celles-ci et, des contacteurs électriques 275 assurent la visualisation au tableau de bord du véhicule de l'état verrouillé ou déverrouillé du pied.

Le fonctionnement du dispositif découle de la description. La poignée de commande 3 peut occuper en principe deux positions illustrées à la figure 2.

La position "V" correspond au verrouillage du pied dans l'orifice du plancher.

La position "D" correspond au déverrouillage.

Selon un mode de réalisation préférentiel, le positionnement initial du verrou 2 sur la tige 4 permet simultanément le verrouillage du pied et son blocage dans le boîtier 6 lorsque la poignée 3 occupe la position "V".

Par contre, le changement de position de "V" vers "D" a pour effet d'éloigner les sommets crantés de la pastille 8 du boîtier 6 et permet à la pastille 8 de s'effacer dans le pied assurant, par voie de conséquence, un libre coulissement du pied dans le boîtier.

Dans ces conditions, on réalise un blocage du mouvement du pied par rapport au boîtier et l'autoréglage de la hauteur correcte du pied par rapport au plancher compte tenu des différents paramètres d'utilisation tels que : emplacements des fixations du dispositif sur le fauteuil, gonflage des roues, poids de l'utilisateur, caractéristiques du plancher.

Le réglage de l'enfoncement du pied 1 dans l'orifice 5 est, par ailleurs, automatiquement réalisé par une butée 19 fixée sur la partie arrière du pied. Cette butée prend, en effet, appui sur le bord supérieur de l'orifice de façon à assurer la rotation du verrou 2 au contact de la face inférieure de l'orifice avec un jeu de l'ordre de 0,5mm et limite les contraintes lors des basculements et des décélérations brutales du véhicule. La forme et l'orientation de la butée par rapport à l'ouverture 273-274 impose une orientation au fauteuil. Une butée additionnelle peut être prévue à l'avant du pied pour limiter ses mouvements lors du freinage du véhicule.

0049201

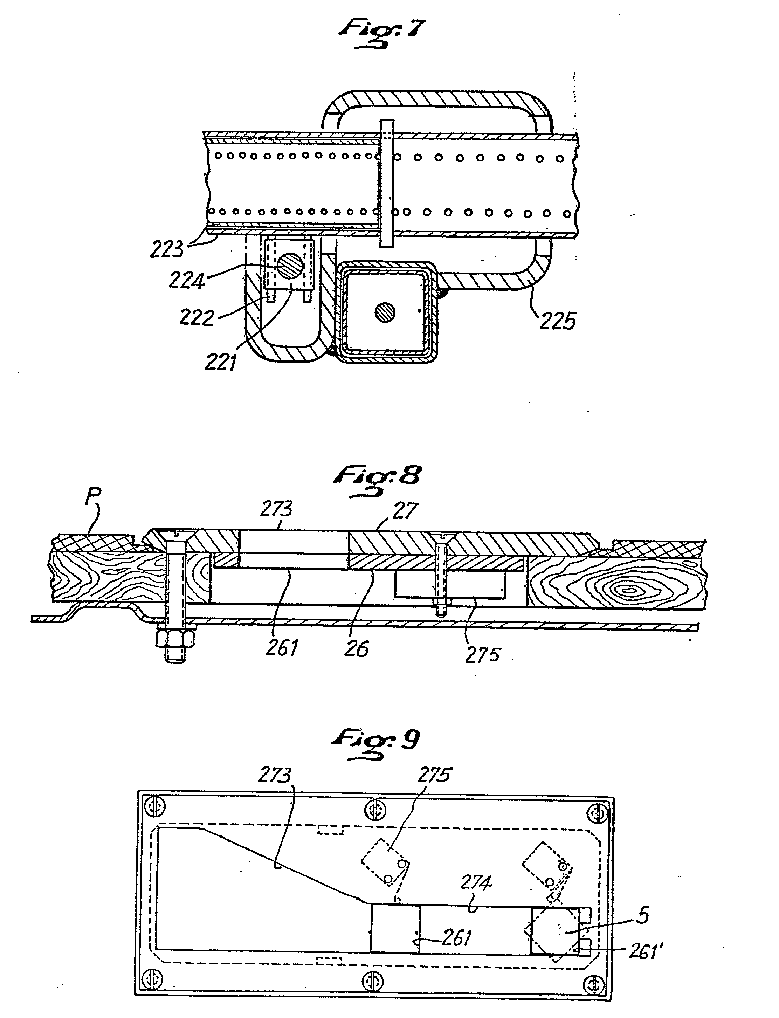

Le réglage de la traverse 11 s'effectue au moyen des colliers 12 voire d'extrémités télescopiques en fonction de la distance existante entre les tubes 13 du cadre du fauteuil et on règle simultanément la position du pied par rapport au plancher. L'immobilisation des colliers est assuré au moyen de boutons de commande 19 et de vis 20 prévues sur les colliers qui assurent à ceux-ci l'immobilisation quel que soit l'écartement des éléments 13 du cadre du fauteuil. Un système vis-écrou représenté à la figure 7 pourrait assurer le réglage et le blocage du pied dans une position verticale quelles que soient les caractéristiques constructives du fauteuil. A cet effet l'écrou 221 est fixé dans une cage 222 rapportée à la traverse 223 et une vis 224 de manoeuvre positionnée dans un gousset 225 rapporté sur le pied assure le réglage de celui-ci. L'utilisateur peut donc monter très simplement le dispositif sur le fauteuil. Il suffit, en effet, de visser simultanément le bouton de commande 19 et le goujon 18 dans la coquille de serrage 15 montée sur le cadre du fauteuil à la hauteur convenable.

- 7 -                              0049201

REVENDICATIONS

1. Dispositif d'immobilisation d'un cadre de fauteuil roulant pour handicapés physiques sur un plancher de véhicule,qui possède une traverse, des moyens de fixation ajustables au cadre du fauteuil montés aux extrémités de la traverse, un pied d'immobilisation sensiblement vertical déplaçable dans un boîtier fixé à la traverse, une poignée de manoeuvre de la montée, de la descente, du verrouillage et du déverrouillage du pied dans un alvéole pratiqué dans le plancher et un verrou pivotant actionné par ladite poignée destiné à la rétention du pied dans cet alvéole, caractérisé par le fait que la poignée de manoeuvre (3) se prolonge par une tige (4) engagée dans le boîtier (6) qui est munie à son extrémité du verrou (2) et dont la partie sous boîtier porte un élément (7) manoeuvré en rotation par la poignée pour assurer l'immobilisation du pied par rapport au boîtier au travers de la paroi du pied.

2. Dispositif selon la revendication 1, caractérisé par le fait que l'élément (7) est constitué par une pastille carrée (8) à sommets crantés qui s'étendent au travers de fenêtres (9) pratiquées dans la paroi du pied jusqu'au contact avec la paroi du boîtier portant des crans complémentaires.

3. Dispositif selon la revendication 2, caractérisé par le fait que les différents crantages sont constitués par des portions de filets.

4. Dispositif selon la revendication 2, caractérisé par le fait que les fenêtres (9) de la paroi du pied sont désaxées par rapport aux axes verticaux des quatre faces du pied et que leurs bords constituent des butées de positionnement angulaire de l'élément cranté (7) fixé à la tige de manoeuvre (4) du verrou et de positionnement du verrou.

5. Dispositif selon l'une quelconque des revendications 1 à 4, caractérisé par le fait que le réglage et le blocage du pied en position verticale est assuré par un système vis-écrou connu en soi.

0049201

6. Dispositif selon l'une quelconque des revendications 2 ou 3, caractérisé par le fait que le jeu entre le verrou (2) et la face inférieure du pied (1) est variable, de façon que l'on dispose d'un jeu maximal lors de l'entrée en prise de crans qui précède le verrouillage, et qui se réduit en position verrouillée.

Fig:1

1/4

0049201

# Fig. 2

# Fig. 6

# Fig. 5

0049201

*Fig.3*

*Fig.4*

*Fig. 7*

223
224
222
221
225

*Fig. 8*

P
273
27
261
26
275

*Fig. 9*

273
275
274
5
261
261'

Office européen
des brevets

**RAPPORT DE RECHERCHE EUROPEENNE**

0049201

Numéro de la demande

EP 81 40 1490

| Catégorie | Citation du document avec indication, en cas de besoin, des parties pertinentes | Revendication concernée |
|---|---|---|
| | US - A - 3 752 265 (LYDER)<br>  * Figures 1-7; colonne 1, lignes 4-7; colonne 2, lignes 15-68; colonne 3, lignes 1-24 et 34-52; colonne 4, lignes 1-5 *<br><br>  -- | 1,5,6 |
| A | DE - A - 2 533 008 (KASSBOHRER) | |
| A | FR - A - 2 383 342 (HEULIEZ) | |
| A | US - A - 3 955 847 (SCHIOWITZ)<br><br>  ---- | |

**DOCUMENTS CONSIDERES COMME PERTINENTS**

**CLASSEMENT DE LA DEMANDE (Int. Cl.³)**

A 61 G 5/00
B 60 P 7/08

**DOMAINES TECHNIQUES RECHERCHES (Int. Cl.³)**

A 61 G
B 60 P

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-12-1981 | MAROSCIA |

OEB Form 1503.1   06.78